# EUROPEAN PATENT APPLICATION

(11) **EP 4 804 394 A1**
(43) Date of publication of application: **09.09.2026**
(21) Application number: 26162497.7
(22) Date of filing: 05.03.2026
(51) Int. Cl.: H02M 1/00, H02M 3/00, H02M 3/28, H02M 3/335

(54) **RESONANT CONVERTER, POWER CONVERSION DEVICE INCLUDING SAME, AND DRIVING METHOD THEREOF**

(30) Priority: 06.03.2025 KR 20250028818
(71) Applicant: SOLUM CO., LTD., Gyeonggi-do 16914 (KR); Konkuk University Industrial Cooperation Corp, Seoul 05029 (KR)
(72) Inventor: KIM, Jong Woo, 02455 Seoul (KR); HONG, Eun Jin, 16697 Suwon-si, Gyeonggi-do (KR); JI, Sang Keun, 16955 Yongin-si, Gyeonggi-do (KR); RYU, Dong Kyun, 05555 Seoul (KR)
(74) Representative: BCKIP Part mbB

(57) **Abstract**

An embodiment may provide a resonant converter including two three-phase LLC converters, in which each of the three-phase LLC converters is divided into phases A, B, and C, primary-side transformer sections of the two three-phase LLC converters are connected in parallel, secondary-side rectifier sections of the two three-phase LLC converters are configured as full-bridge configurations for the phases A, B, and C, respectively, and diode legs of the rectifier sections are shared.

## Description

### BACKGROUND

### Field

The present disclosure relates to a resonant converter, a power conversion device including the resonant converter, and a driving method thereof.

### Description of Related Art

The world is currently facing an unprecedented crisis due to climate change, and accordingly, global efforts to reduce carbon emissions are actively being undertaken. Electric Vehicles (EVs) can significantly reduce total carbon emissions compared to conventional internal combustion engine vehicles, and accordingly, they are attracting attention, together with renewable energy, as a key application area for addressing climate change. In line with this trend, major global automobile manufacturers are making substantial investments and developing technologies to secure a competitive advantage in the Electric Vehicle (EV) market. However, apart from the carbon emission reduction effect of electric vehicles, several challenges remain in achieving widespread adoption and market expansion. Among these challenges, the most urgent issue in the field of power electronics is the expansion and technical improvement of electric vehicle charging infrastructure. In fact, potential purchasers of electric vehicles are reported to hesitate to make a purchase due to a lack of charging stations and limited accessibility. Accordingly, the establishment of reliable and efficient electric vehicle charging infrastructure is emerging as an essential factor for accelerating the adoption of electric vehicles and promoting market growth.

A key requirement of modern electric vehicle charging infrastructure is a design that supports high-power fast charging. This is to maximize user convenience by reducing the charging time of electric vehicles to a level similar to the refueling time of conventional internal combustion engine vehicles. Currently commercially available ultra-fast electric vehicle chargers provide a charging capacity of 300 kW or higher, and accordingly, it is possible to significantly reduce charging time.

In electric vehicle chargers, a resonant converter that can achieve high efficiency with a small number of components, particularly an LLC resonant converter, is mainly used. However, a high-power design requires a higher charging current at the same voltage, and this results in an increase in the magnitude of the sinusoidal current that is transferred to the output capacitor of a resonant converter. As a result, the current stress on the output capacitor increases, and this may increase heat generation of components inside the power conversion circuit and reduce their lifetime.

To solve this problem, a method has been proposed in which multiple resonant converters are connected in parallel and driven in an interleaving scheme by causing their operating phases to differ from one another. However, when variations in characteristics arise among converters due to tolerances in design variables that arise during the manufacturing process, a problem arises in which the output power of the converters is asymmetrically distributed. To address this problem, a complex control technique including additional duty ratio control in addition to the existing frequency modulation scheme is required. Such additional control not only increases system complexity and cost, but may also adversely affect reliability. Therefore, there is a need for the development of a technology that can uniformly distribute the output power of multiple resonant converters and minimize current stress on an output capacitor even without additional control.

Further, electric vehicle charging infrastructure must have versatility that makes it possible to accommodate various electric vehicle models. Existing electric vehicles primarily use 400 V batteries and operate within a voltage variation range of approximately 150 V to 500 V. However, adoption of 800 V batteries is increasing due to growing demand for high-power charging and efforts to reduce the weight of vehicle internal wiring. An 800 V battery has a wide voltage variation range of approximately 300 V to 1000 V. Accordingly, a versatile power conversion circuit for electric vehicle charging must maintain high efficiency over a very wide output voltage range from 150 V to 1000 V. However, when a power conversion circuit is designed to operate over such a wide voltage range, system cost efficiency decreases due to efficiency degradation and increases in circuit size and complexity.

### [Prior Art Document]

### [Patent Document]

(Patent Document 0001) KR 102644445 B
(Patent Document 0002) KR 10-2022-0001923 A
(Patent Document 0003) KR 10-2016-0135958 A
(Patent Document 0004) KR 10-2322330 B
(Patent Document 0005) KR 10-2022-0002783 A

### SUMMARY

The present disclosure provides a resonant converter capable of accommodating diversity of the voltage that is input to a charger as the required voltage range in existing electric vehicle charging systems expands, a power conversion device including the resonant converter, and a driving method thereof.

Further, the present disclosure provides a resonant converter capable of solving a problem in which power distribution becomes imbalanced due to tolerances among converters in the existing method of connecting multiple single-phase converters in parallel, a power conversion device including the resonant converter, and a driving method thereof.

Further, the present disclosure provides a resonant converter capable of solving a problem in which current ripple flowing through an output capacitor increases in existing converters, a power conversion device including the resonant converter, and a driving method thereof.

Further, the present disclosure provides a resonant converter capable of solving a problem in which additional elements such as a relay are required for series/parallel switching of secondary-side transformer windings to support a wide voltage range, a power conversion device including the resonant converter, and a driving method thereof.

An embodiment may provide a resonant converter including two three-phase LLC converters, in which each of the three-phase LLC converters is divided into phases A, B, and C, primary-side transformer sections of the two three-phase LLC converters are connected in parallel, secondary-side rectifier sections of the two three-phase LLC converters are configured as full-bridge configurations for the phases A, B, and C, respectively, and diode legs of the rectifier sections are shared.

In another aspect, there may be provided a resonant converter in which the two three-phase LLC converters are driven with a phase difference of 120 degrees between the phases, so that the two three-phase LLC converters phase-shift resonant currents of the phases and transfer the phase-shifted resonant currents, thereby minimizing current ripple flowing through an output capacitor.

In another aspect, there may be provided a resonant converter in which primary-side windings of respective phases of each of the two three-phase LLC converters are connected in a Y configuration or a Δ configuration.

In another aspect, there may be provided a resonant converter in which secondary-side windings of each of the two three-phase LLC converters are switched in series or in parallel on the basis of phases of drive signals of the two three-phase LLC converters.

In another aspect, there may be provided a resonant converter in which, during high-voltage battery charging, in-phase drive signals are applied to respective phases of each of the two three-phase LLC converters, so that secondary-side windings are connected in series.

In another aspect, there may be provided a resonant converter in which, during low-voltage battery charging, drive signals having a phase difference of 180 degrees are applied to respective phases of each of the two three-phase LLC converters, so that secondary-side windings are connected in parallel.

In another aspect, there may be provided a resonant converter in which inverters of the two respective three-phase LLC converters are connected in parallel or in series.

In another aspect, there may be provided a resonant converter in which each of the inverters of the two respective three-phase LLC converters includes three single-phase half-bridges connected in parallel.

In another aspect, there may be provided a resonant converter in which the rectifier section is configured as a full-bridge.

In another aspect, there may be provided a power conversion device including a resonant converter and a control unit, in which the control unit determines a high-voltage battery and a low-voltage battery by detecting a voltage and a current of a battery, and the control unit adjusts a driving frequency of the two three-phase LLC converters on the basis of the determination result.

An embodiment can reduce current ripple using a phase difference of resonant currents and can maintain high efficiency by enabling current distribution robust to tolerances. Further, an embodiment may provide a resonant converter capable of improving stability of a system by reducing the problem of asymmetric power through a three-phase structure and a Y or Δ connection, and a power conversion device including the resonant converter, and a driving method thereof.

Further, an embodiment may provide a resonant converter having an effect of increasing durability of parts and reducing maintenance costs of a charger because it can reduce heat generation of a capacitor and decrease current stress of internal elements as current ripple flowing through an output capacitor is reduced, a power conversion device including the resonant converter, and a driving method thereof.

Further, an embodiment may provide a resonant converter that increases utilization of electric vehicle charging infrastructure and enables maximization of space efficiency and cost efficiency in construction of charging stations because it has versatility making it possible to charge both high-voltage and low-voltage batteries and can flexibly accommodate various electric vehicle batteries, a power conversion device including the resonant converter, and a driving method thereof.

Further, an embodiment may provide a resonant converter capable of reducing complexity of circuit design and control and reducing overall system cost by maintaining balanced power distribution without additional control by using structural characteristics of a three-phase LLC converter instead of complex sensing and control techniques for each single-phase converter, a power conversion device including the resonant converter, and a driving method thereof.

Further, an embodiment may provide a resonant converter capable of increasing user convenience and promoting widespread adoption of electric vehicles because it can reduce the charging time of electric vehicles to a level similar to the fueling time of conventional internal combustion engine vehicles by providing an ultra-fast charging system supporting a large capacity of 300 kW or higher, a power conversion device including the resonant converter, and a driving method thereof.

### BRIEF DESCRIPTION OF THE DRAWINGS

FIG. 1 illustrates a resonant converter according to an embodiment of the present disclosure.
FIG. 2 is a block diagram of a power conversion device according to an embodiment of the present disclosure.
FIG. 3 is a circuit diagram of a resonant converter according to an embodiment of the present disclosure, in which three transformers of a three-phase LLC converter have a Y-connection configuration.
FIG. 4 illustrates switching control signals over time by a control signal generation unit during high-voltage battery charging, FIG. 5 illustrates secondary-side windings connected in series during high-voltage battery charging, FIG. 6 illustrates switching control signals over time by the control signal generation unit during low-voltage battery charging, and FIG. 7 illustrates secondary-side windings connected in parallel during low-voltage battery charging.
FIG. 8 illustrates a resonant converter according to various embodiments of the present disclosure.
FIG. 9 illustrates a resonant converter according to various embodiments of the present disclosure.
FIG. 10 illustrates, at an input of 800 V and an output of 1250 V/50 kW, an A-phase signal and an A-phase resonant current of a 3P LLC1, and an A-phase signal and an A-phase resonant current of a 3P LLC2.
FIG. 11 illustrates an A-phase secondary-side rectifier current waveform at an input of 800 V and an output of 1250 V/50 kW.
FIG. 12 illustrates, at an input of 800 V and an output of 625 V/50 kW, an A-phase signal and an A-phase resonant current of an LLC1, and an A-phase signal and an A-phase resonant current of an LLC2.
FIG. 13 illustrates an A-phase secondary-side rectifier current at an input of 800 V and an output of 625 V/50 kW.
FIG. 14 illustrates, at an input of 800 V and an output of 800 V/50 kW, an A-phase signal and an A-phase resonant current of an LLC1, and an A-phase signal and an A-phase resonant current of an LLC2.
FIG. 15 illustrates an A-phase secondary-side rectifier current at an input of 800 V and an output of 800 V/50 kW.
FIG. 16 illustrates, at an input of 800 V and an output of 400 V/50 kW, an A-phase signal and an A-phase resonant current of an LLC1, and an A-phase signal and an A-phase resonant current of an LLC2.
FIG. 17 illustrates the waveform of an A-phase secondary-side rectifier current at an input of 800 V and an output of 400 V/50 kW.
FIG. 18 illustrates, at an input of 600 V and an output of 600 V/50 kW, an A-phase signal and an A-phase resonant current of an LLC1, and an A-phase signal and an A-phase resonant current of an LLC2.
FIG. 19 illustrates an A-phase secondary-side rectifier current at an input of 600 V and an output of 600 V/50 kW.
FIG. 20 illustrates, at an input of 600 V and an output of 300 V/50 kW, an A-phase signal and an A-phase resonant current of an LLC1, and an A-phase signal and an A-phase resonant current of an LLC2.
FIG. 21 illustrates the waveform of an A-phase secondary-side rectifier current at an input of 600 V and an output of 300 V/50 kW.
FIGS. 22 and 23 illustrate main waveforms at an output voltage of 200 V (33 kW) in the above region (139 kHz) during low-voltage battery charging according to a simulation of the present disclosure.
FIG. 24 illustrates waveforms when no tolerances are present at an input of 800 V and an output of 1250 V/50 kW.
FIG. 25 illustrates waveforms when tolerances are present at an input of 800 V and an output of 1250 V/50 kW.

### DETAILED DESCRIPTION

The present disclosure may undergo various modifications and may have various embodiments, and particular embodiments are intended to be illustrated in the drawings and described in detail in the following detailed description. The effects and features of the present disclosure, and methods for achieving them, will become apparent by referring to the embodiments described in detail below together with the drawings. However, the present disclosure is not limited to the embodiments disclosed below and may be implemented in various forms. In the following embodiments, terms such as "first" and "second" are used for the purpose of distinguishing one component from another rather than in a limiting sense. Further, singular forms are intended to include plural forms unless the context clearly indicates otherwise. Further, terms such as "include" or "have" indicate that the features or components described in the specification are present and do not preclude the possibility that one or more other features or components may be added. Further, in the drawings, components may be exaggerated or reduced in size for convenience of explanation. For example, the size and thickness of the components shown in the drawings are depicted arbitrarily for convenience of explanation and the present disclosure is not necessarily limited to what is illustrated.

Hereinafter, embodiments of the present disclosure are described in detail with reference to the accompanying drawings, and in the following description of the accompanying drawings, like reference numerals are given to like components and repetitive description is omitted.

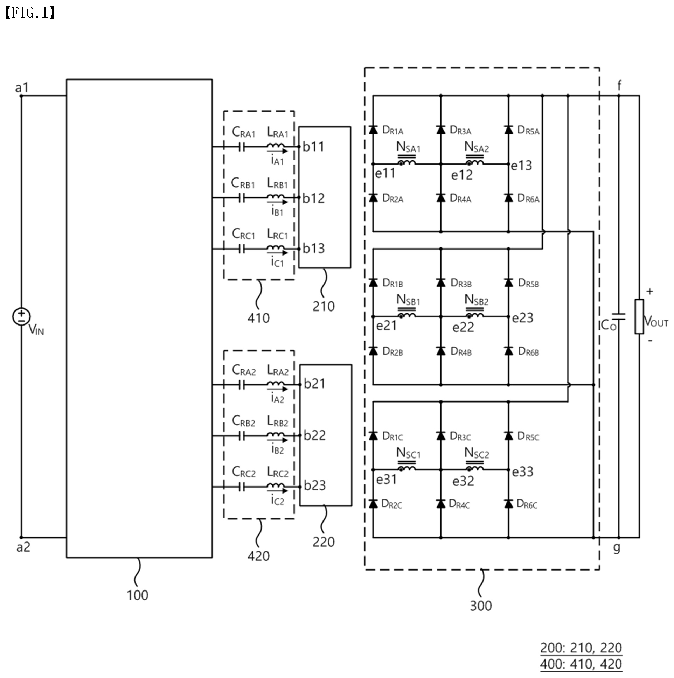

FIG. 1 illustrates a resonant converter according to an embodiment of the present disclosure.

Referring to FIG. 1, a resonant converter 10 according to an embodiment of the present disclosure may include a half-bridge inverter, a resonant inductor, a resonant capacitor, a transformer, and a rectifier stage.

The resonant converter 10 according to an embodiment of the present disclosure may include two three-phase LLC converters. The three-phase LLC converter may be configured by connecting three single-phase half-bridge converters in parallel. The phases may be defined as phase A, phase B, and phase C. The three-phase LLC converter may have different configurations on both the primary side and the secondary side. In the three-phase LLC converter, three primary-side transformers may be connected to each other on both the primary side and the secondary side. The three transformers of the three-phase LLC converter may be connected in a Y configuration or a Δ configuration well known in the art.

In detail, the resonant converter 10 according to an embodiment of the present disclosure may include two three-phase LLC converters, and each three-phase LLC converter may be divided into phase A, phase B, and phase C. Further, the primary-side transformer sections of the two three-phase LLC converters may be connected in parallel, the secondary-side rectifier sections of the two three-phase LLC converters may be configured as full-bridge configurations for the phase A, phase B, and phase C, and diode legs of the rectifier sections may be shared. Further, the resonant circuits of respective phases of each of the two three-phase LLC converters may be connected in a Y or Δ configuration, and so it is possible to reduce the problem of power imbalance caused by tolerances occurring in each phase. Here, the two three-phase LLC converters are driven with a phase difference of 120 degrees between the phases, so they phase-shift the resonant currents of the phases and transfer the phase-shifted resonant currents, whereby it is possible to minimize current ripple flowing through an output capacitor. Further, the secondary-side windings of the two three-phase LLC converters are switched in series or in parallel on the basis of the phases of drive signals of the two three-phase LLC converters, so an output voltage can be adjusted without additional components depending on the charging conditions of a high-voltage battery or a low-voltage battery. In more detail, when a high-voltage battery is charged, in-phase drive signals are applied to the phases of the two three-phase LLC converters, whereby the secondary-side windings can be connected in series, and when a low-voltage battery is charged, drive signals having a phase difference of 180 degrees are applied to the respective phases of the two three-phase LLC converters, whereby the secondary-side windings can be connected in parallel. That is, an output voltage can be adjusted without additional components depending on the charging conditions of a high-voltage battery or a low-voltage battery.

In more detail, in the resonant converter 10, two three-phase LLC converters may be connected in parallel to an input terminal. On the primary side, the three-phase LLC converters may be connected in parallel. In the secondary-side rectifier stage, rectifier sides corresponding to the phases A, B, and C of each LLC converter may be configured as full-bridge configurations, and the rectifier sides of the respective phases each may share one diode leg of the rectifier sections. Since resonant currents of the phases are phase-shifted by 120 degrees and transferred, even though a high output current is provided, the magnitude of current ripple flowing through an output capacitor can be kept small. Further, when six single-phase LLC converters are operated in parallel in the related art, power sensing and introduction of additional control techniques are required for all six LLC converters in order to solve power imbalance caused by tolerances. In contrast, in the resonant converter 10 according to the present disclosure, since three LLC converter resonant tanks are connected in a Y or Δ configuration, the problem of power imbalance caused by tolerances in one phase can be significantly reduced. Further, in an embodiment, in order to provide a wide output voltage range, primary-side drive signals of two three-phase LLC converters can be used to connect output-side transformer windings of the three-phase LLC converters in series or in parallel without additional components.

In detail, the resonant converter 10 may include an inverter section 100, a transformer section 200, a rectifier section 300, and a resonant circuit 400.

The inverter section 100 may include a pair of inverters. The inverters may be connected in parallel or in series.

The inverter section 100 may include a single-phase half-bridge inverter.

The transformer section 200 may include first and second transformer sections 210 and 220. The transformer section 200 may be configured as a primary-side transformer section, and the rectifier section 300 may include a secondary-side transformer section. The resonant circuit 400 may include first and second resonant circuits 410 and 420.

The input power source Vin may be connected between a first input-side node a1 and a second input-side node a2. Further, the inverter section 100 may be connected between the first input-side node a1 and the second input-side node a2. Accordingly, the input power source Vin may be connected to an input side of the inverter section 100. Further, the first and second resonant circuits 410 and 420 may be connected to the inverter section 100. An output side of the inverter section 100 may be connected to each of the first and second resonant circuits 410 and 420. The output side of the inverter section 100 may be connected to one side of each of the first and second resonant circuits 410 and 420. The transformer section 200 may be connected to the resonant circuit 400. The transformer section 200 may be connected to another side of the resonant circuit 400. The transformer section 200 may be connected to another side of each of the first and second resonant circuits 410 and 420.

The rectifier section 300 may be connected between a first output terminal f and a second output terminal g. The output side of the rectifier section 300 may be connected between the first output terminal f and the second output terminal g. The resonant converter 10 according to an embodiment of the present disclosure may further include an output capacitor Co. The output capacitor Co may be connected to the output side of the rectifier section 300. The output capacitor Co may be connected between the first output terminal f and the second output terminal g. The output capacitor Co may be connected in parallel with a load side. The load side may be connected between the first output terminal f and the second output terminal g. The voltage across the load side is defined as an output voltage Vout.

The first resonant circuit 410 may include a 1-1 resonant capacitor CRA1 and a 1-1 resonant inductor LRA1 connected in series between the inverter section 100 and the first transformer section 210. One side of the 1-1 resonant capacitor CRA1 may be connected to the inverter section 100, and another side may be connected to the 1-1 resonant inductor LRA1. Further, one side of the 1-1 resonant inductor LRA1 may be connected to the 1-1 resonant capacitor CRA1, and another side may be connected to the first transformer section 210. Further, the first resonant circuit 410 may further include a 1-2 resonant capacitor CRB1 and a 1-2 resonant inductor LRB1 connected in series between the inverter section 100 and the first transformer section 210. One side of the 1-2 resonant capacitor CRB1 may be connected to the inverter section 100, and another side may be connected to the 1-2 resonant inductor LRB1. Further, one side of the 1-2 resonant inductor LRB1 may be connected to the 1-2 resonant capacitor CRB1, and another side may be connected to the first transformer section 210. Further, the first resonant circuit 410 may further include a 1-3 resonant capacitor CRC1 and a 1-3 resonant inductor LRC1 connected in series between the inverter section 100 and the first transformer section 210. One side of the 1-3 resonant capacitor CRC1 may be connected to the inverter section 100, and another side may be connected to the 1-3 resonant inductor LRC1. Further, one side of the 1-3 resonant inductor LRC1 may be connected to the 1-3 resonant capacitor CRC1, and another side may be connected to the first transformer section 210.

The second resonant circuit 420 may include a 2-1 resonant capacitor CRA2 and a 2-1 resonant inductor LRA2 connected in series between the inverter section 100 and the first transformer section 210. One side of the 2-1 resonant capacitor CRA2 may be connected to the inverter section 100, and another side may be connected to the 2-1 resonant inductor LRA2. Further, one side of the 2-1 resonant inductor LRA2 may be connected to the 2-1 resonant capacitor CRA2, and another side may be connected to the first transformer section 210. Further, the second resonant circuit 420 may further include a 2-2 resonant capacitor CRB2 and a 2-2 resonant inductor LRB2 connected in series between the inverter section 100 and the first transformer section 210. One side of the 2-2 resonant capacitor CRB2 may be connected to the inverter section 100, and another side may be connected to the 2-2 resonant inductor LRB2. Further, one side of the 2-2 resonant inductor LRB2 may be connected to the 2-2 resonant capacitor CRB2, and another side may be connected to the first transformer section 210. Further, the second resonant circuit 420 may further include a 2-3 resonant capacitor CRC2 and a 2-3 resonant inductor LRC2 connected in series between the inverter section 100 and the first transformer section 210. One side of the 2-3 resonant capacitor CRC2 may be connected to the inverter section 100, and another side may be connected to the 2-3 resonant inductor LRC2. Further, one side of the 2-3 resonant inductor LRC2 may be connected to the 2-3 resonant capacitor CRC2, and another side may be connected to the first transformer section 210.

The first transformer section 210 may be composed of 1-1 to 1-3 primary-side windings, and the second transformer section 220 may be composed of 2-1 to 2-3 primary-side windings.

The rectifier section 300 is a full-bridge rectifier connected to secondary-side windings of respective phases, and can convert power into DC output by sharing rectifier diode legs of the respective phases.

The rectifier section 300 may include first to third rectifier sections.

The first rectifier section may include a first diode and a first secondary-side transformer section. The first diode may include a 1-1 diode DR1A, a 1-2 diode DR2A, a 1-3 diode DR3A, a 1-4 diode DR4A, a 1-5 diode DR5A, and a 1-6 diode DR6A. Rectifier-stage diodes of a center leg in the circuit may be the 1-3 diode DR3A and the 1-4 diode DR4A.

A cathode terminal of the 1-1 diode DR1A may be connected to the first output terminal f, and an anode terminal may be connected to a 1-1 rectifying terminal e11. A cathode terminal of the 1-3 diode DR3A may be connected to the first output terminal f, and an anode terminal may be connected to a 1-2 rectifying terminal e12. A cathode terminal of the 1-5 diode DR5A may be connected to the first output terminal f, and an anode terminal may be connected to a 1-3 rectifying terminal e13. A cathode terminal of the 1-2 diode DR2A may be connected to the 1-1 rectifying terminal e11, and an anode terminal may be connected to the second output terminal g. A cathode terminal of the 1-4 diode DR4A may be connected to the 1-2 rectifying terminal e12, and an anode terminal may be connected to the second output terminal g. A cathode terminal of the 1-6 diode DR6A may be connected to the 1-3 rectifying terminal e13, and an anode terminal may be connected to the second output terminal g.

The first secondary-side transformer section of the first rectifier section may include a 1-1 secondary-side winding NSA1 and a 2-1 secondary-side winding NSA2. The 1-1 secondary-side winding NSA1 may be connected between the 1-1 rectifying terminal e11 and the 1-2 rectifying terminal e12, and the 2-1 secondary-side winding NSA2 may be connected between the 1-2 rectifying terminal e12 and the 1-3 rectifying terminal e13. Further, the polarity dot of the 1-1 secondary-side winding NSA1 corresponds to the 1-1 rectifying terminal e11, and the polarity dot of the 2-1 secondary-side winding NSA2 corresponds to the 1-2 rectifying terminal e12.

The second rectifier section may include a second diode and a second secondary-side transformer section. The second diode may include a 2-1 diode DR1B, a 2-2 diode DR2B, a 2-3 diode DR3B, a 2-4 diode DR4B, a 2-5 diode DR5B, and a 2-6 diode DR6B. Rectifier-stage diodes of a center leg in the circuit may be the 2-3 diode DR3B and the 2-4 diode DR4B.

A cathode terminal of the 2-1 diode DR1B may be connected to the first output terminal f, and an anode terminal may be connected to a 2-1 rectifying terminal e21. A cathode terminal of the 2-3 diode DR3B may be connected to the first output terminal f, and an anode terminal may be connected to a 2-2 rectifying terminal e22. A cathode terminal of the 2-5 diode DR5B may be connected to the first output terminal f, and an anode terminal may be connected to a 2-3 rectifying terminal e23. A cathode terminal of the 2-2 diode DR2B may be connected to the 2-1 rectifying terminal e21, and an anode terminal may be connected to the second output terminal g. A cathode terminal of the 2-4 diode DR4B may be connected to the 2-2 rectifying terminal e22, and an anode terminal may be connected to the second output terminal g. A cathode terminal of the 2-6 diode DR6B may be connected to the 2-3 rectifying terminal e23, and an anode terminal may be connected to the second output terminal g.

The second secondary-side transformer section of the second rectifier section may include a 1-2 secondary-side winding NSB1 and a 2-2 secondary-side winding NSB2. The 1-2 secondary-side winding NSB1 may be connected between the 2-1 rectifying terminal e21 and the 2-2 rectifying terminal e22, and the 2-2 secondary-side winding NSB2 may be connected between the 2-2 rectifying terminal e22 and the 2-3 rectifying terminal e23. Further, the polarity dot of the 1-2 secondary-side winding NSB1 corresponds to the 2-1 rectifying terminal e21, and the polarity dot of the 2-2 secondary-side winding NSB2 corresponds to the 2-2 rectifying terminal e22.

The third rectifier section may include a third diode and a third secondary-side transformer section. The third diode may include a 3-1 diode DR1C, a 3-2 diode DR2C, a 3-3 diode DR3C, a 3-4 diode DR4C, a 3-5 diode DR5C, and a 3-6 diode DR6C. Rectifier-stage diodes of a center leg in the circuit may be the 3-3 diode DR3C and the 3-4 diode DR4C.

A cathode terminal of the 3-1 diode DR1C may be connected to the first output terminal f, and an anode terminal may be connected to a 3-1 rectifying terminal e31. A cathode terminal of the 3-3 diode DR3C may be connected to the first output terminal f, and an anode terminal may be connected to a 3-2 rectifying terminal e32. A cathode terminal of the 3-5 diode DR5C may be connected to the first output terminal f, and an anode terminal may be connected to a 3-3 rectifying terminal e33. A cathode terminal of the 3-2 diode DR2C may be connected to the 3-1 rectifying terminal e31, and an anode terminal may be connected to the second output terminal g. A cathode terminal of the 3-4 diode DR4C may be connected to the 3-2 rectifying terminal e32, and an anode terminal may be connected to the second output terminal g. A cathode terminal of the 3-6 diode DR6C may be connected to the 3-3 rectifying terminal e33, and an anode terminal may be connected to the second output terminal g.

The third secondary-side transformer section of the third rectifier section may include a 1-3 secondary-side winding NSC1 and a 2-3 secondary-side winding NSC2. The 1-3 secondary-side winding NSC1 may be connected between the 3-1 rectifying terminal e31 and the 3-2 rectifying terminal e32, and the 2-3 secondary-side winding NSC2 may be connected between the 3-2 rectifying terminal e32 and the 3-3 rectifying terminal e33. Further, the polarity dot of the 1-3 secondary-side winding NSC1 corresponds to the 3-1 rectifying terminal e31, and the polarity dot of the 2-3 secondary-side winding NSC2 corresponds to the 3-2 rectifying terminal e32.

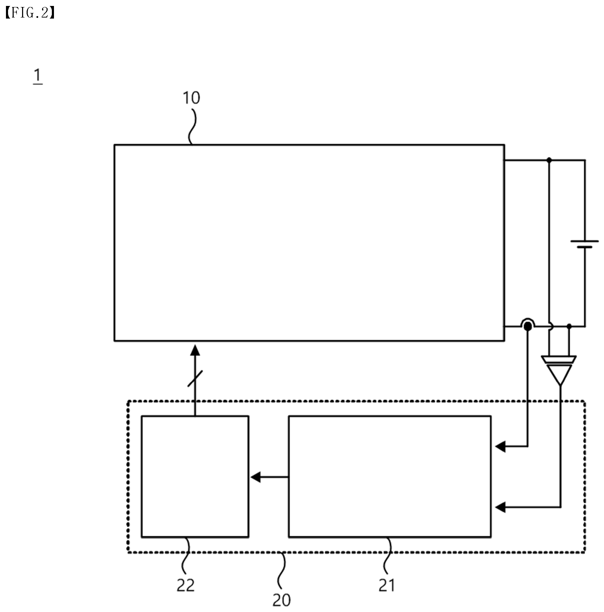

FIG. 2 is a block diagram of a power conversion device according to an embodiment of the present disclosure.

Referring to FIGS. 1 and 2, a power conversion device 1 may include a resonant converter 10 and a control unit 20.

The control unit 20 can recognize whether a battery to be charged is a high-voltage battery having a voltage equal to or higher than a preset first reference value or a low-voltage battery having a voltage equal to or lower than a preset second reference value, and can control required output voltage and current. The control unit 20 can change an operating frequency FS to obtain a required output, and after determining whether a battery is a high-voltage battery or a low-voltage battery, can control a phase difference differently between drive signals Q11 to Q61 of the LLC1 converter and drive signals Q12 to Q62 of the LLC2 converter.

The control unit 20 can control the resonant converter 10 such that inverter drive signals of the phases A, B, and C of the LLC converter each have a duty ratio of 0.5. Accordingly, the inverter drive signals may be phase-shifted by 120 degrees. Further, control of an output voltage by the control unit 20 may be performed using frequency control of drive signals.

The control unit 20 may include a voltage and current control unit 21 and a control signal generation unit 22. The voltage and current control unit 21 can determine the type of a battery to be charged (high-voltage or low-voltage) and can set the output voltage and current required for charging. The voltage and current control unit 21 can determine whether a battery is a high-voltage battery or a low-voltage battery by measuring the voltage of the battery. The determination result can be used to set the range of an output voltage of a charger. The voltage and current control unit 21 can provide appropriate voltage and current by adjusting an operating frequency Fs of the charger in accordance with the set output voltage and current. The voltage and current control unit 21 can determine operating conditions in accordance with characteristics of a battery to be charged and transmit the operating conditions to the control signal generation unit 22.

The control signal generation unit 22 can generate drive signals (PWM signals) of a plurality of switching elements in the inverter section 100 in accordance with information received from the voltage and current control unit 21.

When a battery is determined to be a high-voltage battery by a battery determination unit, the control signal generation unit 22 can generate drive signals for connecting the secondary-side windings constituting a secondary-side transformer in series by adjusting the phases of switching signals of the resonant converter 10. Accordingly, a high output voltage can be provided.

When a battery is determined to be a low-voltage battery by the battery determination unit, the control signal generation unit 22 can generate drive signals for connecting the secondary-side windings constituting the secondary-side transformer in parallel by adjusting the phases of switching signals differently. Accordingly, a low output voltage can be provided.

That is, the voltage and current control unit 21 can detect characteristics of a battery to be charged (such as a voltage range), set output voltage and current corresponding thereto, and transmit information on the set output voltage and current to the control signal generation unit 22. Further, the control signal generation unit 22 generates PWM signals suitable for the plurality of switching elements in the inverter section 100 on the basis of the received information on the output voltage and current, whereby the plurality of switching elements can be controlled. The signals cause the secondary-side windings to be connected in series or in parallel such that high-voltage or low-voltage charging is enabled.

Meanwhile, although the control unit 20 is illustrated as sensing a voltage and a current of a battery, the present disclosure is not limited thereto, and any method having a purpose of reducing an operating frequency range over a wide output voltage range during operation of the resonant converter 10, such as battery voltage, battery current, an operating state of the resonant converter 10, or communication with the battery, may be used.

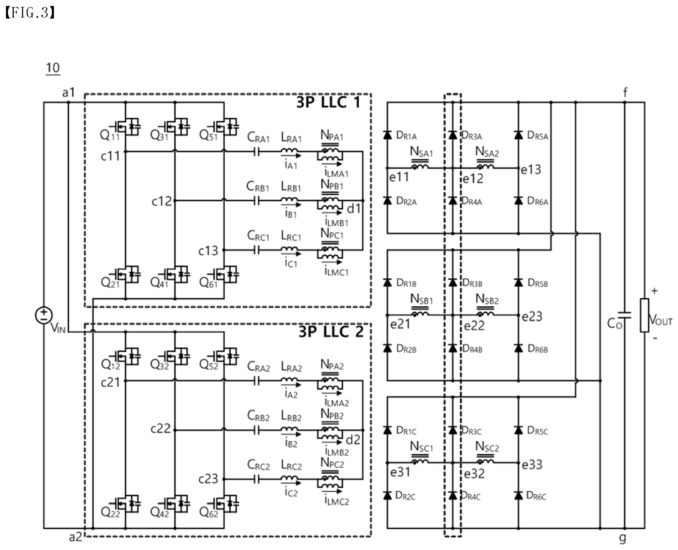

FIG. 3 is a circuit diagram of a resonant converter according to an embodiment of the present disclosure, in which three transformers of a three-phase LLC converter have a Y-connection configuration.

Referring to FIGS. 1 and 3, the inverter section 100 may include first and second inverter sections. The first and second inverter sections may be connected in parallel.

The first inverter section may include 1-1 to 1-6 switching elements Q11, Q21, Q31, Q41, Q51, and Q61.

The 1-1 switching element Q11 may be connected between a first input-side node a1 and a 1-1 inverter node c11, the 1-3 switching element Q31 may be connected between the first input-side node a1 and a 1-2 inverter node c12, the 1-5 switching element Q51 may be connected between the first input-side node a1 and a 1-3 inverter node c13, the 1-2 switching element Q21 may be connected between the 1-1 inverter node c11 and a second input-side node a2, the 1-4 switching element Q41 may be connected between the 1-2 inverter node c12 and the second input-side node a2, and the 1-6 switching element Q61 may be connected between the 1-3 inverter node c13 and the second input-side node a2. Further, drain terminals of the 1-1, 1-3, and 1-5 switching elements Q11, Q31, and Q51 may be connected to the first input-side node a1. Further, the 1-1 resonant capacitor CRA1 of the first resonant circuit 410 may be connected between the 1-1 inverter node c11 and the 1-1 resonant inductor LRA1, the 1-2 resonant capacitor CRB1 may be connected between the 1-2 inverter node c12 and the 1-2 resonant inductor LRB1, and the 1-3 resonant capacitor CRC1 may be connected between the 1-3 inverter node c13 and the 1-3 resonant inductor LRC1.

The second inverter section may include 2-1 to 2-6 switching elements Q12, Q22, Q32, Q42, Q52, and Q62.

The 2-1 switching element Q12 may be connected between the first input-side node a1 and a 2-1 inverter node c21, the 2-3 switching element Q32 may be connected between the first input-side node a1 and a 2-2 inverter node c22, the 2-5 switching element Q52 may be connected between the first input-side node a1 and a 2-3 inverter node c23, the 2-2 switching element Q22 may be connected between the 2-1 inverter node c21 and the second input-side node a2, the 2-4 switching element Q42 may be connected between the 2-2 inverter node c22 and the second input-side node a2, and the 2-6 switching element Q62 may be connected between the 2-3 inverter node c23 and the second input-side node a2. Further, drain terminals of the 2-1, 2-3, and 2-5 switching elements Q12, Q32, and Q52 may be connected to the first input-side node a1. Further, the 2-1 resonant capacitor CRA2 of the second resonant circuit 420 may be connected between the 2-1 inverter node c21 and the 2-1 resonant inductor LRA2, the 2-2 resonant capacitor CRB2 may be connected between the 2-2 inverter node c22 and the 2-2 resonant inductor LRB2, and the 2-3 resonant capacitor CRC2 may be connected between the 2-3 inverter node c23 and the 2-3 resonant inductor LRC2.

Further, the first transformer section 210 may include a 1-1 primary-side winding NPA1, a 1-2 primary-side winding NPB1, and a 1-3 primary-side winding NPC1. The 1-1 primary-side winding NPA1 may be connected between the 1-1 resonant inductor LRA1 and a first transformer section node d1, the 1-2 primary-side winding NPB1 may be connected between the 1-2 resonant inductor LRB1 and the first transformer section node d1, and the 1-3 primary-side winding NPC1 may be connected between the 1-3 resonant inductor LRC1 and the first transformer section node d1. Further, a connection point between the 1-1 primary-side winding NPA1 and the 1-1 resonant inductor LRA1 may correspond to the polarity dot of the 1-1 primary-side winding NPA1, a connection point between the 1-2 primary-side winding NPB1 and the 1-2 resonant inductor LRB1 may correspond to the polarity dot of the 1-2 primary-side winding NPB1, and a connection point between the 1-3 primary-side winding NPC1 and the 1-3 resonant inductor LRC1 may correspond to the polarity dot of the 1-3 primary-side winding NPC1.

The second transformer section 220 may include a 2-1 primary-side winding NPA2, a 2-2 primary-side winding NPB2, and a 2-3 primary-side winding NPC2. The 2-1 primary-side winding NPA2 may be connected between the 2-1 resonant inductor LRA2 and a second transformer section node d2, the 2-2 primary-side winding NPB2 may be connected between the 2-2 resonant inductor LRB2 and the second transformer section node d2, and the 2-3 primary-side winding NPC2 may be connected between the 2-3 resonant inductor LRC2 and the second transformer section node d2. Further, a connection point between the 2-1 primary-side winding NPA2 and the 2-1 resonant inductor LRA2 may correspond to the polarity dot of the 2-1 primary-side winding NPA2, a connection point between the 2-2 primary-side winding NPB2 and the 2-2 resonant inductor LRB2 may correspond to the polarity dot of the 2-2 primary-side winding NPB2, and a connection point between the 2-3 primary-side winding NPC2 and the 2-3 resonant inductor LRC2 may correspond to the polarity dot of the 2-3 primary-side winding NPC2.

Meanwhile, the first inverter section and the first resonant circuit 410 may be defined as a first three-phase converter (3P LLC1), and the second inverter section and the second resonant circuit 420 may be defined as a second three-phase converter (3P LLC2).

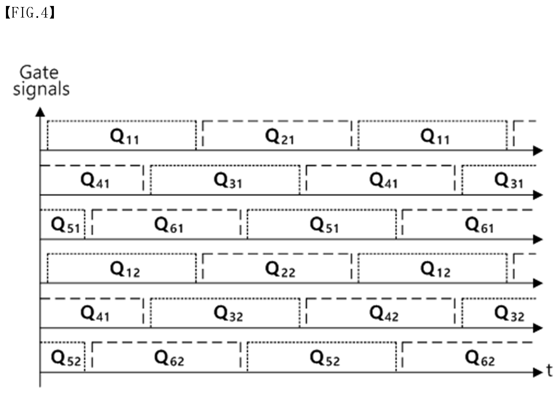

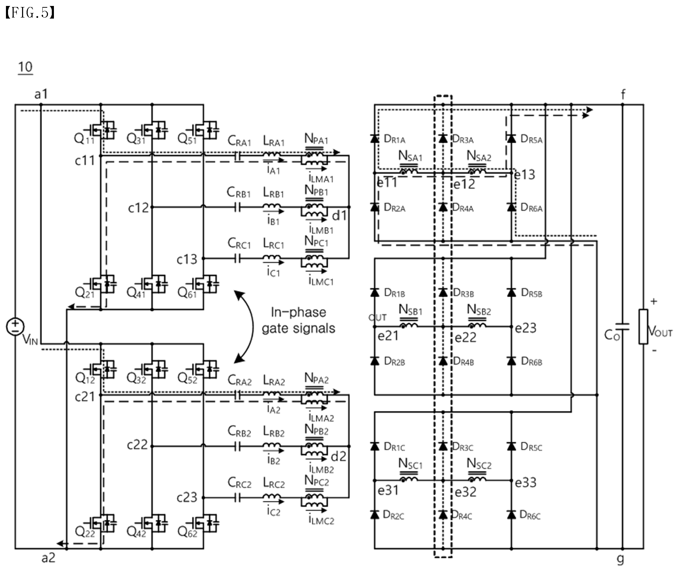

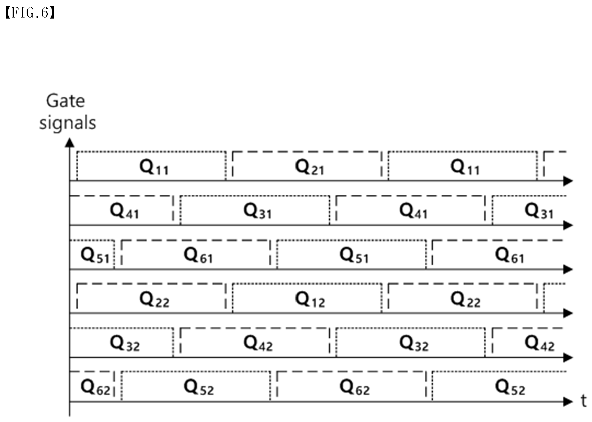

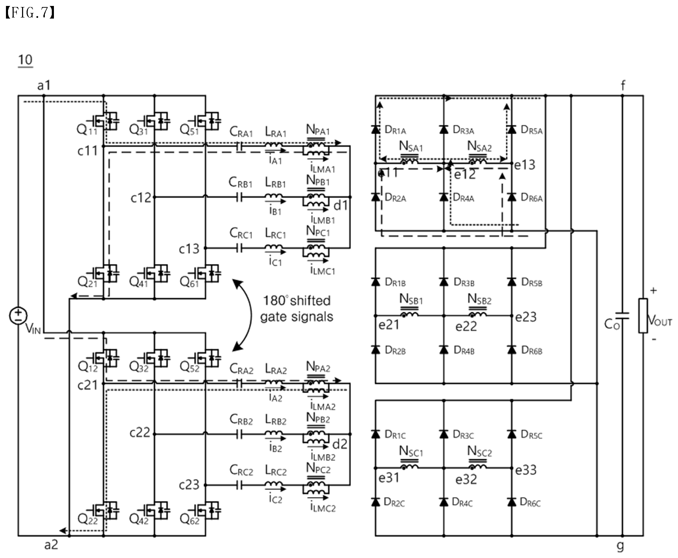

FIG. 4 illustrates switching control signals over time by a control signal generation unit during high-voltage battery charging, FIG. 5 illustrates secondary-side windings connected in series during high-voltage battery charging, FIG. 6 illustrates switching control signals over time by the control signal generation unit during low-voltage battery charging, and FIG. 7 illustrates secondary-side windings connected in parallel during low-voltage battery charging.

### - During High-Voltage Battery Charging

Signals of the PWM generation unit during high-voltage battery charging are illustrated. For convenience of description, the frequency of the PWM signal is omitted for convenience, and upper switch drive signals of all half-bridge inverter legs are indicated by dotted lines with small dots, and lower switch drive signals are indicated by dotted lines with long dots. Switch drive signals Q11, Q31, and Q51 represent upper switch drive signals for phases A, B, and C of the 3P LLC1 illustrated in FIG. 3, and Q21, Q41, and Q61 represent lower switch drive signals for the phases A, B, and C. Further, switch drive signals Q12, Q32, and Q52 represent upper switch drive signals for phases A, B, and C of the 3P LLC2 illustrated in FIG. 3, and Q22, Q42, and Q62 represent lower switch drive signals for the phases A, B, and C. As illustrated in FIG. 4, switch drive signals for the phases A, B, and C are phase-shifted by 120 degrees. Further, it can be seen that switch drive signals for the 3P LLC1 and the 3P LLC2 are applied such that a signal of the upper switch and a signal of the lower switch for each phase are applied simultaneously. Accordingly, since currents flowing into phase transformers of the 3P LLC1 and the 3P LLC2 are in the same direction, currents flowing in secondary-side windings should also be in the same direction, and the secondary-side windings, which are output-side transformer windings, may always be connected in series. Accordingly, as illustrated in FIG. 5, currents flowing in the phases A, B, and C of the transformers of the 3P LLC1 and the 3P LLC2 are also in phase with each other, and secondary-side windings of transformers of the phases A, B, and C of the 3P LLC1 and the 3P LLC2 are connected in series, so that a high output voltage can be output.

### - During Low-Voltage Battery Charging

As illustrated in FIG. 6, when a low-voltage battery is charged, drive signals Q11 to Q61 of the 3P LLC1 and drive signals Q12 to Q62 of the 3P LLC2 may be applied in opposite phases. Accordingly, as illustrated in FIG. 7, currents flowing in the phases A, B, and C of the transformers of the 3P LLC1 and the 3P LLC2 are also in opposite phases, and secondary-side windings of transformers of the phases A, B, and C of the 3P LLC1 and the 3P LLC2 are connected in parallel, so that a low output voltage can be output.

As described above, a control method of an embodiment can achieve a wide output voltage range without additional components while maintaining a current distribution characteristic robust to tolerances of a three-phase LLC converter and its small output capacitor current.

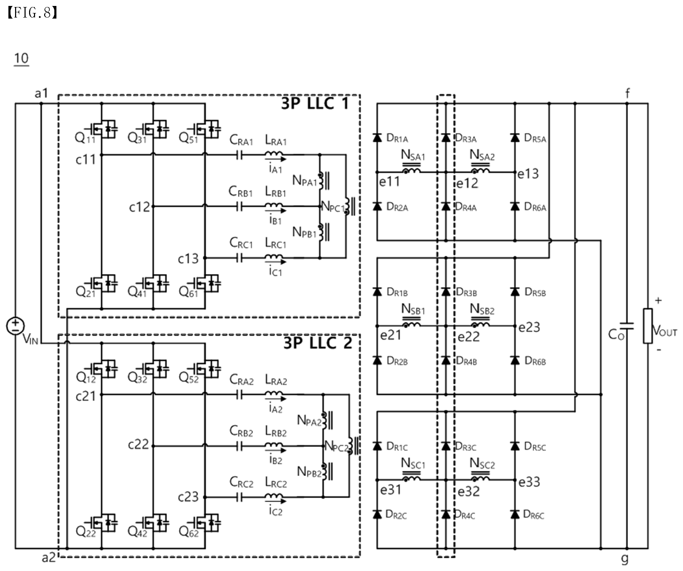

FIG. 8 illustrates a resonant converter according to various embodiments of the present disclosure.

Only configurations that are different from those of the resonant converter in FIG. 3 are described.

Referring to FIG. 8, in the resonant converter 10 according to various embodiments of the present disclosure, a 3P LLC1 and a 3P LLC2 are connected in parallel on the primary side, and the primary-side transformer section may be connected in a Δ configuration.

In detail, the first transformer section 210 may include a 1-1 primary-side winding NPA1, a 1-2 primary-side winding NPB1, and a 1-3 primary-side winding NPC1. The 1-1 primary-side winding NPA1 may be connected between the 1-1 resonant inductor LRA1 and the 1-2 resonant inductor LRB1, the 1-2 primary-side winding NPB1 may be connected between the 1-2 resonant inductor LRB1 and the 1-3 resonant inductor LRC1, and the 1-3 primary-side winding NPC1 may be connected between the 1-1 resonant inductor LRA1 and the 1-3 resonant inductor LRC1. Further, a connection point between the 1-1 primary-side winding NPA1 and the 1-1 resonant inductor LRA1 may correspond to the polarity dot of the 1-1 primary-side winding NPA1, a connection point between the 1-2 primary-side winding NPB1 and the 1-2 resonant inductor LRB1 may correspond to the polarity dot of the 1-2 primary-side winding NPB1, and a connection point between the 1-3 primary-side winding NPC1 and the 1-3 resonant inductor LRC1 may correspond to the polarity dot of the 1-3 primary-side winding NPC1.

The second transformer section 220 may include a 2-1 primary-side winding NPA2, a 2-2 primary-side winding NPB2, and a 2-3 primary-side winding NPC2. The 2-1 primary-side winding NPA2 may be connected between the 2-1 resonant inductor LRA2 and the 2-2 resonant inductor LRB2, the 2-2 primary-side winding NPB2 may be connected between the 2-2 resonant inductor LRB2 and the 2-3 resonant inductor LRC2, and the 2-3 primary-side winding NPC2 may be connected between the 2-1 resonant inductor LRA2 and the 2-3 resonant inductor LRC2. Further, a connection point between the 2-1 primary-side winding NPA2 and the 2-1 resonant inductor LRA2 may correspond to the polarity dot of the 2-1 primary-side winding NPA2, a connection point between the 2-2 primary-side winding NPB2 and the 2-2 resonant inductor LRB2 may correspond to the polarity dot of the 2-2 primary-side winding NPB2, and a connection point between the 2-3 primary-side winding NPC2 and the 2-3 resonant inductor LRC2 may correspond to the polarity dot of the 2-3 primary-side winding NPC2.

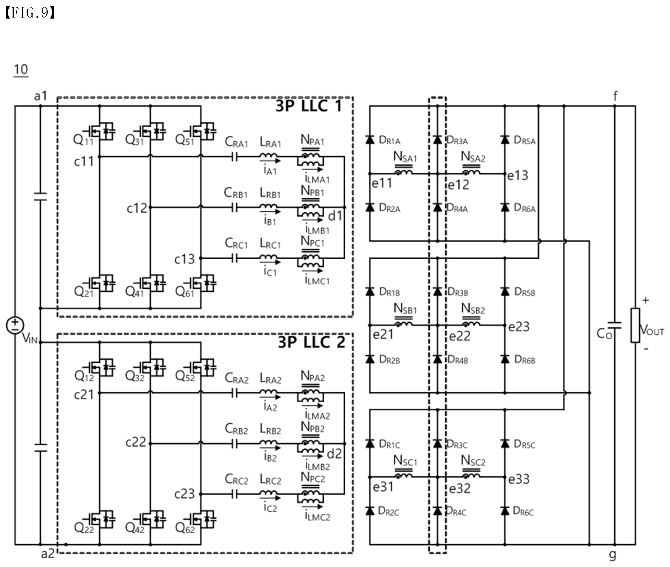

FIG. 9 illustrates a resonant converter according to various embodiments of the present disclosure.

Only configurations that are different from those of the resonant converter in FIG. 3 are described.

Referring to FIG. 9, in a resonant converter 10 according to various embodiments of the present disclosure, a 3P LLC1 and a 3P LLC2 are connected in series on the primary side, and the primary-side transformer section may be connected in a Y configuration.

The resonant converters of FIGS. 8 and 9 can be described in the same manner as the operation of the resonant converter described with reference to FIG. 3, and the operational effects are also substantially the same.

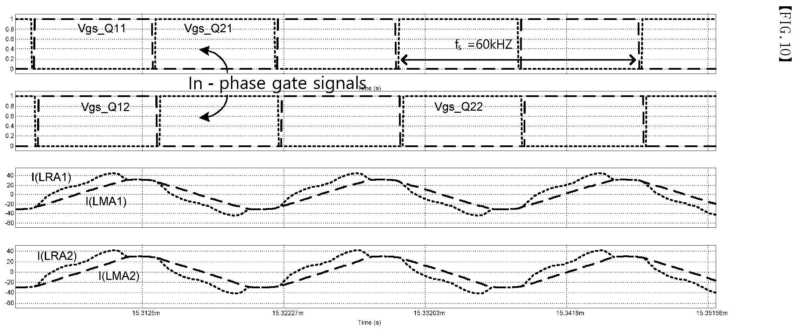

FIGS. 10 to 13 illustrate main waveforms at the same switching frequency (60 kHz), at an output voltage of 1250 V during high-voltage battery charging and at an output voltage of 625 V during low-voltage battery charging according to a simulation of the present disclosure.

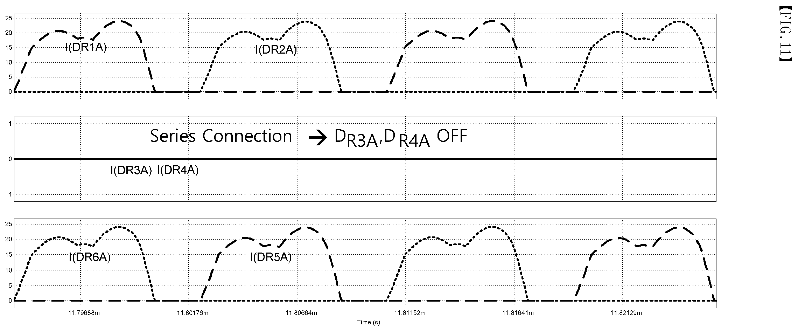

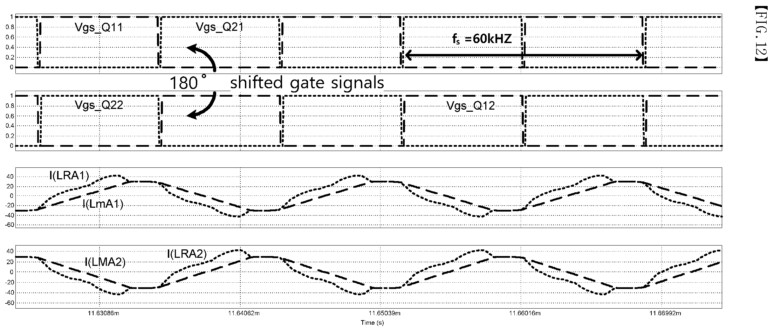

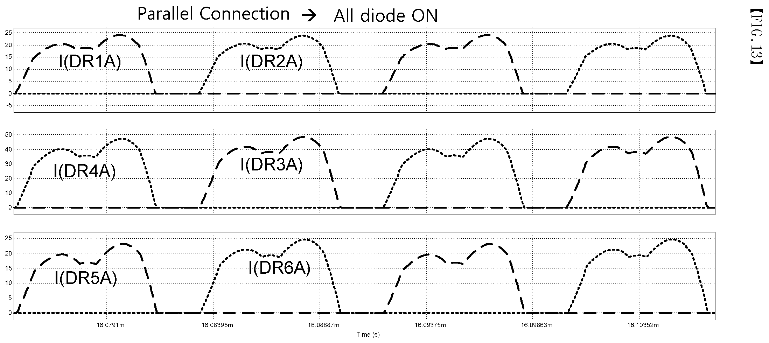

FIG. 10 illustrates a phase-A signal and a phase-A resonant current of a 3P LLC1, and a phase-A signal and a phase-A resonant current of a 3P LLC2, at an input of 800 V and an output of 1250 V/50 kW, FIG. 11 illustrates the waveform of a phase-A secondary-side rectifier-stage current at an input of 800 V and an output of 1250 V/50 kW, FIG. 12 illustrates a phase-A signal and a phase-A resonant current of the LLC1, and a phase-A signal and a phase-A resonant current of the LLC2, at an input of 800 V and an output of 625 V/50 kW, and FIG. 13 illustrates a phase-A secondary-side rectifier-stage current at an input of 800 V and an output of 625 V/50 kW.

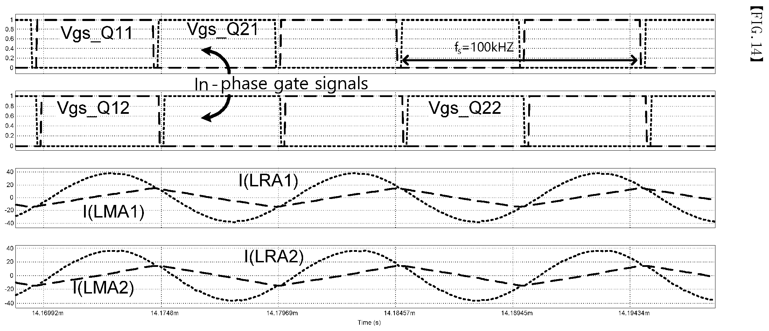

FIGS. 14 to 17 illustrate main waveforms at the same switching frequency (100 kHz), at an output voltage of 800 V during high-voltage battery charging and at an output voltage of 400 V during low-voltage battery charging according to a simulation of the present disclosure.

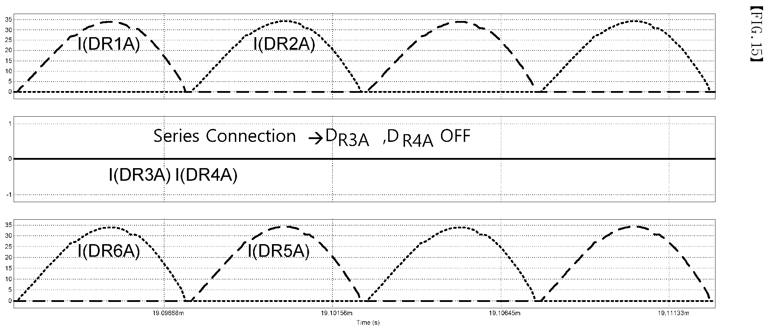

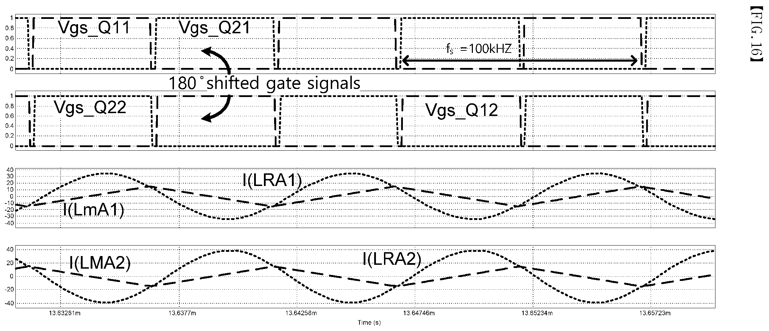

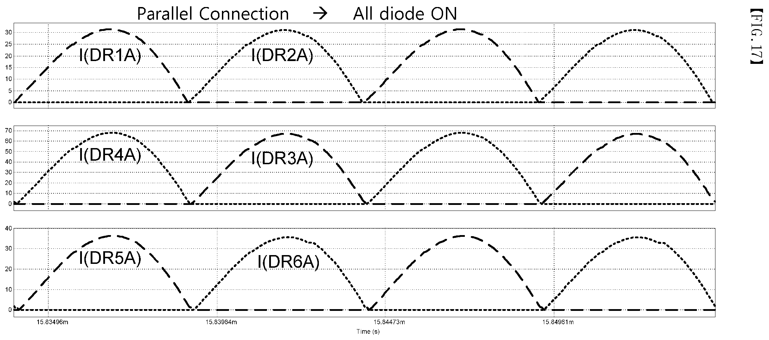

FIG. 14 illustrates a phase-A signal and a phase-A resonant current of an LLC1, and a phase-A signal and a phase-A resonant current of an LLC2, at an input of 800 V and an output of 800 V/50 kW, FIG. 15 illustrates a phase-A secondary-side rectifier-stage current at an input of 800 V and an output of 800 V/50 kW, FIG. 16 illustrates a phase-A signal and a phase-A resonant current of the LLC1, and a phase-A signal and a phase-A resonant current of the LLC2, at an input of 800 V and an output of 400 V/50 kW, and FIG. 17 illustrates the waveform of a phase-A secondary-side rectifier-stage current at an input of 800 V and an output of 400 V/50 kW.

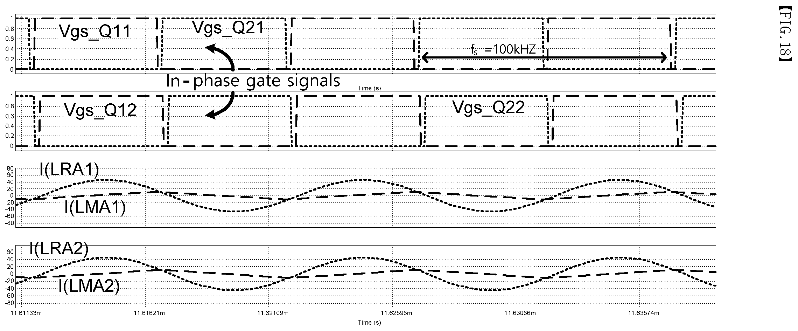

FIGS. 18 to 21 illustrate main waveforms at the same switching frequency (100 kHz), at an output voltage of 600 V during high-voltage battery charging and at an output voltage of 300 V during low-voltage battery charging according to a simulation of the present disclosure.

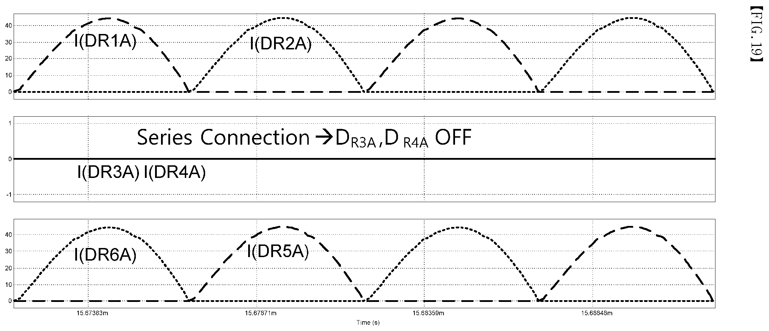

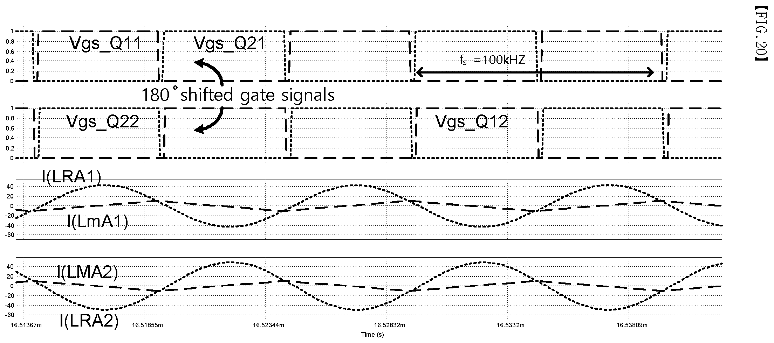

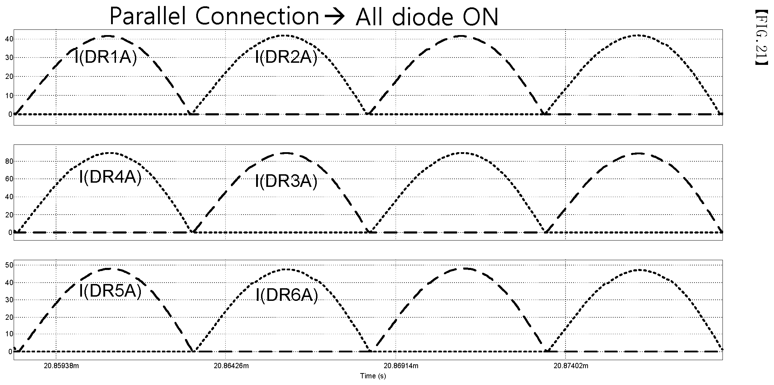

FIG. 18 illustrates a phase-A signal and a phase-A resonant current of an LLC1, and a phase-A signal and a phase-A resonant current of an LLC2, at an input of 600 V and an output of 600 V/50 kW, FIG. 19 illustrates a phase-A secondary-side rectifier-stage current at an input of 600 V and an output of 600 V/50 kW, FIG. 20 illustrates a phase-A signal and a phase-A resonant current of the LLC1, and a phase-A signal and a phase-A resonant current of the LLC2, at an input of 600 V and an output of 300 V/50 kW, and FIG. 21 illustrates the waveform of a phase-A secondary-side rectifier-stage current at an input of 600 V and an output of 300 V/50 kW.

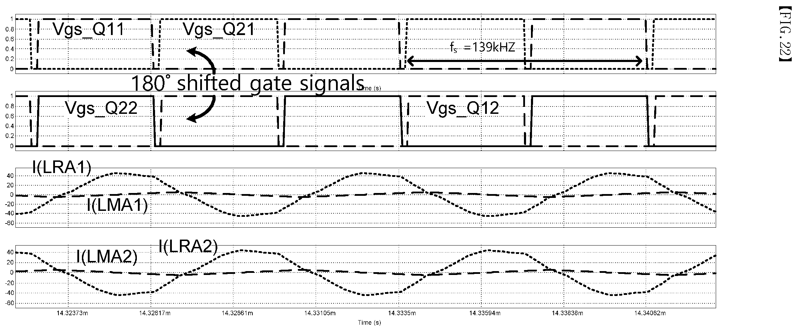

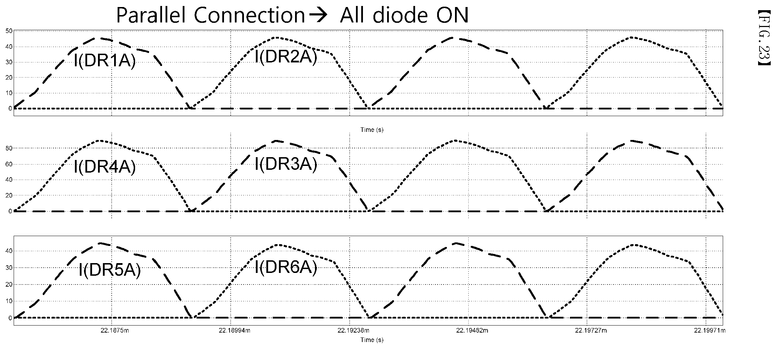

FIGS. 22 and 23 illustrate main waveforms at an output voltage of 200 V (33 kW) in the above region (139 kHz) during low-voltage battery charging according to a simulation of the present disclosure.

FIG. 22 illustrates a phase-A signal and a phase-A resonant current of the LLC1, and a phase-A signal and a phase-A resonant current of the LLC2, at an input of 600 V and an output of 200 V/33 kW, and FIG. 23 illustrates the waveform of a phase-A secondary-side rectifier-stage current at an input of 600 V and an output of 200 V/33 kW.

FIGS. 10 to 23 show the phase-A signal and the resonant current of the LLC1, the phase-A signal and the resonant current of the LLC2, and the secondary-side rectifier-stage diode current under respective operating conditions.

During high-voltage battery charging, signals in phase are applied to Q11 and Q12 and to Q21 and Q22, so that no current flows through rectifier-stage diodes DR3A and DR4A of the center leg shared by the transformer secondary-side windings connected in series. At the same switching frequency, during low-voltage battery charging, gate signals in opposite phases are applied to Q11 and Q12 and to Q21 and Q22, so that the transformer secondary-side windings are connected in parallel and a current flows through all diodes.

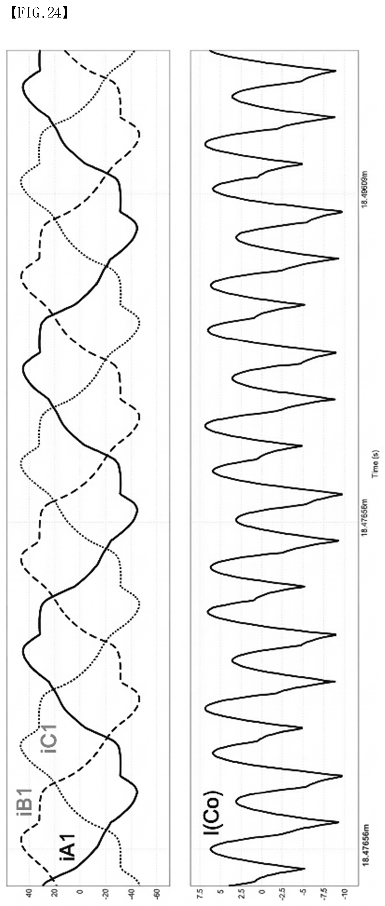

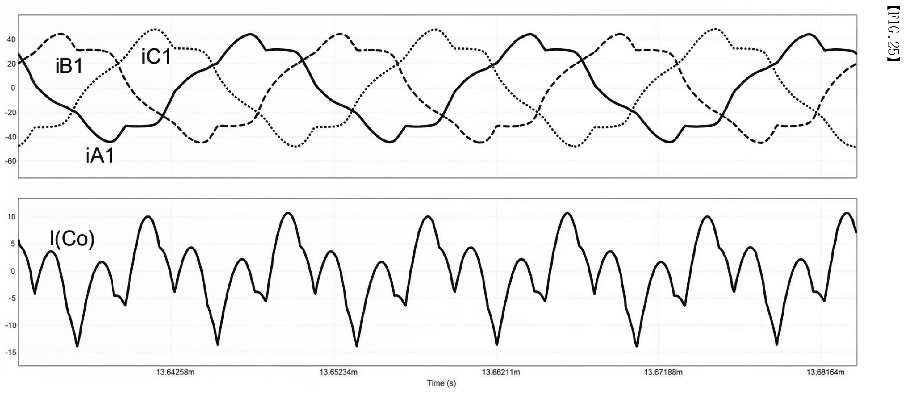

FIGS. 24 and 25 illustrate the waveforms of primary-side three-phase currents and an output capacitor current according to a simulation. FIG. 24 illustrates waveforms when no tolerances are present at an input of 800 V and an output of 1250 V/50 kW, and FIG. 25 illustrates waveforms when tolerances are present as follows at an input of 800 V and an output of 1250 V/50 kW according to a simulation. In this case, LR = 13 µH, LRA1 = LR, LRB1 = 0.9 × LR, and LRC1 = 1.1 × LR.

Referring to FIGS. 24 and 25, three-phase resonant currents and an output capacitor current of the LLC1 when no tolerances are present, and three-phase resonant currents and an output capacitor current of the LLC1 when tolerances are present can be seen. In an embodiment, since resonant currents in respective phases are transferred with phase shifts of 120 degrees, current ripple at an output capacitor is small. Further, it can be seen that a resonant tank of a three-phase LLC converter is connected in a Y configuration, so the problem of asymmetry due to tolerances does not occur. Therefore, an embodiment has the effect that an output voltage range is widened without using additional components by connecting transformer secondary-side windings in series/in parallel, and a current-sharing characteristic robust to tolerances and a small output capacitor current can be achieved.

Embodiments of the present disclosure described above may be implemented in the type of program instructions that can be executed through various computer components, and may be recorded on a computer-readable recording medium. The computer-readable recording medium may include program instructions, data files, and data structures individually or in combinations thereof. The program instructions that are recorded on a computer-readable recording medium may be those specifically designed and configured for the present disclosure or may be those available and known to those engaged in computer software in the art. The computer-readable recording medium includes magnetic media such as hard disks, floppy disks, and magnetic tapes, optical media such as CD-ROMs and DVDs, magneto-optical media such as floptical disks, and hardware devices specifically configured to store and execute program instructions, such as ROM, RAM, and flash memory. The program instructions include not only machine language codes made by a compiler, but also high-level language codes that can be executed by a computer using an interpreter, etc. A hardware device may be changed into one or more software modules to perform the processes according to the present disclosure, and vice versa.

Specific embodiments described herein are exemplary embodiments and do not limit the scope of the present disclosure in any way. For briefness of the specification, electronic components, control systems, and software of the related art, and other functional aspects of the system may not be described. Furthermore, wire connection and connecting members between components shown in the figures exemplarily represent functional connections and/or physical or circuit connections, and in actual devices, they may be replaced or may be shown as various additional functional connections, physical connections, or circuit connections. Further, unless stated in detail such as "necessary" and "important," they may not be necessary component for applying the present disclosure.

Although exemplary embodiments of the present disclosure were described above, it should be understood that the present disclosure may be changed and modified in various ways by those skilled in the art without departing from the spirit and scope of the present disclosure described in the following claims. Therefore, the technical scope of the present disclosure is not limited to those described in the detailed description of the specification, and should be determined by claims.

## Claims

1. A resonant converter 10 comprising two three-phase LLC converters,
wherein each of the three-phase LLC converters is divided into phases A, B, and C, primary-side transformer sections of the two three-phase LLC converters are connected in parallel,
secondary-side rectifier sections of the two three-phase LLC converters are configured as full-bridge configurations for the phases A, B, and C, respectively, and
diode legs of the rectifier sections are shared.

2. The resonant converter 10 of claim 1, wherein the two three-phase LLC converters are driven with a phase difference of 120 degrees between the phases, so that the two three-phase LLC converters phase-shift resonant currents of the phases and transfer the phase-shifted resonant currents, thereby minimizing current ripple flowing through an output capacitor.

3. The resonant converter 10 of claim 1, wherein primary-side windings of the respective phases of each of the two three-phase LLC converters are connected in a Y configuration or a Δ configuration.

4. The resonant converter 10 of claim 1, wherein secondary-side windings of each of the two three-phase LLC converters are switched in series or in parallel on the basis of phases of drive signals of the two three-phase LLC converters.

5. The resonant converter 10 of claim 1, wherein, during high-voltage battery charging, in-phase drive signals are applied to the respective phases of each of the two three-phase LLC converters, so that secondary-side windings are connected in series.

6. The resonant converter 10 of claim 1, wherein, during low-voltage battery charging, drive signals having a phase difference of 180 degrees are applied to the respective phases of each of the two three-phase LLC converters, so that secondary-side windings are connected in parallel.

7. The resonant converter 10 of claim 1, wherein inverters of the two respective three-phase LLC converters are connected in parallel or in series.

8. The resonant converter 10 of claim 7, wherein each of the inverters of the two respective three-phase LLC converters includes three single-phase half-bridges connected in parallel.

9. The resonant converter 10 of claim 1, wherein the rectifier section is configured as a full-bridge.

10. A power conversion device 1 comprising:
the resonant converter 10 of any one of claims 1 to 9; and
a control unit 20,
wherein the control unit 20 determines a high-voltage battery and a low-voltage battery by detecting a voltage and a current of a battery, and
the control unit 20 adjusts a driving frequency of the two three-phase LLC converters on the basis of the determination result.
